Europäisches Patentamt

European Patent Office

Office européen des brevets

(19)

(11) **EP 0 517 880 B1**

(12) **FASCICULE DE BREVET EUROPEEN**

(45) Date de publication et mention
de la délivrance du brevet:
**25.03.1998   Bulletin 1998/13**

(21) Numéro de dépôt: **92901987.5**

(22) Date de dépôt: **20.12.1991**

(51) Int Cl.⁶: **D01F 6/60**, D02G 3/48,
D01F 11/08

(86) Numéro de dépôt international:
**PCT/CH91/00276**

(87) Numéro de publication internationale:
**WO 92/12279 (23.07.1992 Gazette 1992/19)**

(54) **MONOFILAMENT ARAMIDE AYANT UNE PEAU FAIBLEMENT STRUCTUREE - PROCEDE POUR OBTENIR CE MONOFILAMENT**

ARAMIDMONOFILAMENT MIT LEICHT STRUKTURIERTER OBERFLÄCHE, VERFAHREN ZUR HERSTELLUNG DIESES MONOFILAMENTS

ARAMID MONOFILAMENT WITH WEAKLY STRUCTURED SKIN AND PROCESS OF PRODUCTION THEREOF

(84) Etats contractants désignés:
**BE CH DE ES FR GB IT LI LU NL**

(30) Priorité: **27.12.1990  FR 9016595**

(43) Date de publication de la demande:
**16.12.1992   Bulletin 1992/51**

(73) Titulaire: **MICHELIN RECHERCHE ET TECHNIQUE S.A.**
**CH-1700 Fribourg (CH)**

(72) Inventeurs:
- **MERALDI, Jean-Paul**
  **CH-8049 Zürich (CH)**
- **RIBIERE, Jo[l**
  **CH-8304 Wallisellen (CH)**
- **ALMON, Jean-Jacques**
  **CH-8600 Dübendorf (CH)**

(74) Mandataire: **Doussaint, Jean-Marie**
**Michelin & Cie,**
**Service SGD/LG/PI Ladoux**
**63040 Clermont-Ferrand Cedex 01 (FR)**

(56) Documents cités:
**WO-A-91/00381**

- **WORLD PATENTS INDEX LATEST, Section Ch, Week 8618, Derwent Publications Ltd., London, GB; Class A, AN 86-115596**
- **WORLD PATENTS INDEX, Section Ch, Week 7940, Derwent Publications Ltd., London, GB; Class A, AN 79-72402B**

## Description

L'invention concerne des fibres dites "aramides", c'est-à-dire des fibres de macromolécules linéaires formées de groupes aromatiques liés entre eux par des liaisons amides dont au moins 85 % sont directement liées à deux noyaux aromatiques, et plus précisément des fibres aramides réalisées à partir de compositions de filage optiquement anisotropes.

De manière connue, les fibres aramides à haute résistance et haut module se caractérisent généralement par des phénomènes de fibrillation à la surface de leurs filaments et une faible résistance à l'abrasion. Ces points faibles et/ou certains procédés ayant pour but d'y remédier ont par exemple été décrits, pour des fibres aramides classiques à faible diamètre filamentaire, dans les brevets ou demandes de brevets suivants :

EP-A-163 403, EP-A-332 919, US-A-4 670 343, JP-A-01/85 372, JP-A-63/243 330.

Cette fragilité nuisible à certaines propriétés d'usage de ces fibres peut également être néfaste à celles de leurs assemblages ou à celles des articles renforcés par ces fibres ou ces assemblages.

La demande internationale PCT/CH90/00155 correspondant à EP-A-0 435 975 (priorités: 28.06.89 et 11.4.90 ; publication: 10.01.91), décrit des monofilaments aramides ayant à la fois un diamètre important et des caractéristiques mécaniques élevées, à l'état brut de filage.

Cependant, ces monofilaments aramides sont globalement soumis aux mêmes faiblesses que celles décrites ci-dessus. Il était donc tout à fait souhaitable de réaliser des monofilaments aramides dont la résistance à la fibrillation et à l'abrasion serait fortement améliorée.

Le but de l'invention est donc de proposer un monofilament aramide ayant non seulement un diamètre important et des caractéristiques mécaniques élevées, mais possédant également une structure superficielle nouvelle qui lui confère une meilleure résistance à la fibrillation et à l'abrasion, ainsi que de meilleures propriétés d'adhésion, comparées à celles du mono filament aramide décrit dans la demande internationale précitée. Ce nouveau monofilament aramide possède en outre de hautes caractéristiques d'énergie à la rupture.

Le monofilament aramide conforme à l'invention a les propriétés suivantes :

a) il vérifie les relations :

$$1,7 \leq Ti \leq 260 \;;$$
$$40 \leq D \leq 480 \;;$$
$$T \geq 180 - D/3 \;;$$
$$Mi \geq 1600 \;;$$
$$Ar > 2,00$$
$$Er > 20,0 - D/30 \;;$$

$Ti$ étant le titre en tex, $D$ étant le diamètre en $\mu m$ (micromètre), $T$ étant la ténacité en cN/tex, $Mi$ étant le module initial en cN/tex, $Ar$ étant l'allongement à la rupture en %, $Er$ étant l'énergie à la rupture par unité de masse en J/g, pour ce monofilament ;

b) il possède une peau faiblement structurée par rapport à son coeur.

L'invention concerne également un procédé permettant d'obtenir un tel monofilament.
Le procédé conforme à l'invention comporte les étapes suivantes :

a) on réalise une solution d'au moins un polyamide aromatique tel qu'au moins 85 % des liaisons amides (-CO-NH-) soient reliées directement à deux noyaux aromatiques, la viscosité inhérente V.I.(p) de ce(s) polyamide(s) étant au moins égale à 4,5 dl/g, la concentration C de polyamide(s) dans la solution étant d'au moins 20 % en poids, cette composition de filage étant optiquement anisotrope à l'état fondu et au repos ;

b) on extrude cette solution dans une filière à travers un capillaire dont le diamètre "d" est supérieur à 80 $\mu m$, la température de filage Tf, c'est-à-dire la température de la solution lors de son passage dans le capillaire, étant au plus égale à 105°C ;

c) le jet liquide sortant du capillaire est étiré dans une couche de fluide non coagulante ;

d) on introduit ensuite la veine liquide étirée ainsi obtenue dans un milieu coagulant, le monofilament ainsi en cours de formation restant en contact dynamique avec le milieu coagulant pendant le temps "t", la température du milieu coagulant Tc étant au plus égale à 16°C ;

e) on lave et on sèche le monofilament ;

f) on met le monofilament lavé et séché au contact d'un solvant de ce monofilament, ce solvant de traitement étant capable de dissoudre rapidement sa surface de manière à produire une peau faiblement structurée par rapport à son coeur;

g) on lave et on sèche le monofilament ainsi obtenu ; le diamètre D du monofilament sec ainsi terminé et le temps t défini à l'étape (d) sont reliés par les relations suivantes :
$t = KD^2$ ; $K > 30$,
t étant exprimé en seconde et D étant exprimé en millimètre.

Le monofilament conforme à l'invention peut être utilisé soit seul, soit sous forme d'assemblages, par exemple pour renforcer des articles, notamment des articles en matières plastiques et/ou en caoutchoucs, de tels articles étant par exemple des courroies, des tuyaux, des nappes de renfort, des enveloppes de pneumatiques, l'invention concernant également ces assemblages et ces articles ainsi renforcés.

L'invention sera aisément comprise à l'aide des exemples qui suivent et des figures toutes schématiques relatives à ces exemples.

Sur le dessin :

- la figure 1 représente un dispositif de filage ;

- la figure 2 représente en coupe une filière utilisée dans le dispositif de la figure 1 ;

- la figure 3 représente un dispositif de traitement qui, combiné au dispositif de la figure 1, permet de mettre en oeuvre le procédé conforme à l'invention ;

- les figures 4 et 5 représentent chacune, vu au microscope électronique, un monofilament après abrasion, le monofilament de la figure 4 étant conforme à l'invention.

## I - Méthodes de tests utilisées

### A - Conditionnement
Par conditionnement on entend dans cette description le traitement des monofilaments selon la norme d'Allemagne Fédérale DIN 53802-20/65 de juillet 1979.

### B - Titre
Le titre (ou masse linéique) des monofilaments est déterminé selon la norme d'Allemagne Fédérale DIN 53830 de juin 1965. La mesure est effectuée par pesée pour chaque monofilament sur au moins trois échantillons préalablement conditionnés, chacun correspondant à une longueur de 50 m. Le titre correspond à la moyenne des mesures des échantillons pour le monofilament considéré, il est exprimé en tex.

### C - Masse volumique
On mesure les masses volumiques des monofilaments en utilisant la technique du tube à gradient de masse volumique pour matières plastiques spécifiée dans la norme ASTM D1505-68 (réapprouvée en 1975), méthode C en utilisant un mélange de 1,1,2-trichlorotrifluoroéthane et de 1,1,1-trichloroéthane comme système liquide pour le tube à gradient de masse volumique.

Les échantillons utilisés sont de courts tronçons d'environ 2 cm de monofilaments noués de manière non serrée. Avant mesure, ils sont immergés deux heures dans la composante du système liquide qui possède la masse volumique la plus faible. Ensuite ils demeurent 12 heures dans ledit tube avant d'être évalués. On veille particulièrement à éviter la rétention de bulles d'air à la surface des monofilaments.

On détermine la masse volumique en $g/cm^3$ de 2 échantillons par monofilament, et on rapporte la valeur moyenne avec 4 chiffres significatifs.

### D - Diamètre
Sauf indication contraire, le diamètre des monofilaments est calculé à partir de leur titre et de leur masse volumique, selon la formule :

$$D = 2 \times 10^{1,5} (Ti/\pi\rho)^{1/2}$$

D représentant le diamètre des monofilaments en µm, Ti représentant le titre en tex, et $\rho$ représentant la masse volumique en $g/cm^3$.

E - Propriétés mécaniques

Les propriétés mécaniques des monofilaments sont mesurées à l'aide d'une machine de traction de la société Zwick GmbH & Co (République Fédérale d'Allemagne) de type 1435 ou de type 1445, correspondant aux normes d'Allemagne Fédérale DIN 51220 d'Octobre 1976, DIN 51221 d'août 1976 et DIN 51223 de décembre 1977, selon le mode opératoire décrit dans la norme d'Allemagne Fédérale DIN 53834 de février 1976.

Les monofilaments subissent une traction sur une longueur initiale de 400 mm. Tous les résultats sont obtenus avec une moyenne de 10 mesures.

La ténacité (T) et le module initial (Mi) sont indiqués en cN/tex (centinewton par tex).

L'allongement à la rupture (Ar) est indiqué en pourcentage (%).

Le module initial (Mi) est défini comme la pente de la partie linéaire de la courbe représentant les variations de la force en fonction de l'allongement, cette partie linéaire intervenant juste après la prétension standard de 0,5 cN/tex.

L'énergie à la rupture par unité de masse (Er) est exprimée en J/g (joule par gramme) et elle est déterminée conformément à la norme DIN 53834 de février 1976 précitée.

F - Viscosité inhérente

La viscosité inhérente (V.I.) est déterminée pour le polymère et les monofilaments. V.I.(p) représente la viscosité inhérente du polymère et V.I.(f) celle du monofilament. Dans les deux cas, elle est exprimée en décilitre par gramme et définie par l'équation suivante :

$$V.I. = (1/C) \, Ln \, (t_1/to)$$

où

- C est la concentration de la solution de polymère (0,5 g de polymère ou de monofilament dans 100 $cm^3$ de solvant). Le solvant est de l'acide sulfurique concentré à 96 %.

- Ln est le logarithme népérien.

- $t_1$ et to représentent le temps d'écoulement de la solution de polymère et du solvant pur, respectivement, à $30 \pm 0,1$ °C dans un viscosimètre à capillaire de type Ubbelohde.

G - Analyse par micro-diffraction électronique

On utilise un microscope électronique à transmission Philips du type CM 12 sous une tension d'accélération de 120 kV. Les observations en microdiffraction électronique sont réalisées sur des coupes longitudinales sagittales dont l'épaisseur est voisine de 50 nm. La technique utilisée est dite "à faisceau parallèle", la taille du spot au niveau de l'échantillon est de 50 nm environ. Les clichés de microdiffraction sont enregistrés sur film Agfa à haute sensibilité.

H - Caractéristiques optiques

L'anisotropie optique des compositions de filage, à l'état fondu et au repos, est observée à l'aide d'un microscope de polarisation du type Olympus BH2, équipé d'une platine chauffante.

Le microscope ci-dessus sert en outre à l'examen optique des monofilaments, par exemple pour l'observation de leurs coupes transversales.

La surface des monofilaments est observée également à l'aide d'un microscope électronique à balayage JEOL type 25S-III, sous une tension d'accélération de 12,5 kV.

I - Résistance à l'auto-abrasion sous courbure

Pour apprécier la résistance à l'auto-abrasion des monofilaments, et de façon plus générale leur résistance à la fatigue, un test de friction "filament contre filament" sous courbure est employé.

On utilise deux courts tronçons du même monofilament, d'environ 25 cm de longueur. Le premier tronçon appelé filament statique est maintenu selon un axe sensiblement horizontal à l'aide de deux rouleaux à gorge, fixes et distants de 5 cm environ. Ce filament est soumis à une tension T1 à l'aide de poids constants fixés à ses extrémités. Le second tronçon, appelé filament dynamique, lui-même soumis à une tension T2, grâce à un poids constant fixé à une de ses extrémités, est tendu sur le filament statique et courbé autour de ce dernier selon un angle de courbure de 90 degrés environ. Un dispositif mécanique auquel est fixée l'autre extrémité du filament dynamique assure le glissement forcé et répété de ce filament dynamique sur le filament statique, selon un mouvement linéaire alternatif de fréquence et d'amplitude données. Le plan vertical contenant l'axe du filament dynamique se trouve toujours sensiblement perpendiculaire au plan vertical contenant l'axe du filament statique.

Au début du test, la tension T1 appliquée au filament statique est sensiblement égale à 2 fois la tension T2 appliquée au filament dynamique. Ces conditions permettent de maintenir l'angle de courbure du filament dynamique à une valeur proche de 90 degrés.

Le nombre de cycles d'auto-abrasion est enregistré jusqu'à la rupture d'un des deux filaments. La résistance à l'auto-abrasion du monofilament considéré est appréciée par le nombre moyen de cycles enregistré à la rupture pour 10 mesures.

J - Mesures d'adhésion

Les mesures d'adhésion des monofilaments sont effectuées sur des assemblages de ces monofilaments.

Les assemblages sont insérés entre deux couches de mélanges de caoutchouc de telle sorte que les assemblages soient disposés dans un plan, en formant des boucles en U dont les branches (brins) sont parallèles, la partie incurvée des U étant disposée à l'extérieur des couches de caoutchouc.

Les mélanges de caoutchouc ont la composition suivante (parties en poids) :

| Caoutchouc naturel | 50 |
|---|---|
| SBR | 30 |
| PBR | 20 |
| Noir | 50 |
| ZnO | 5 |
| Acide stéarique | 1 |
| antioxydant | 1 |
| Soufre | 2 |
| Accélérateur | 1 |

SBR :       caoutchouc copolymère styrène-butadiène ;

PBR :       caoutchouc polybutadiène ;

Antioxydant :       Santoflex ®13 de la société Monsanto ;

Accélérateur :       type sulfénamide.

Les éprouvettes ainsi obtenues sont disposées dans un moule et vulcanisées à 160°C pendant 15 minutes sous une pression de 15 daN/cm$^2$.

On caractérise l'adhésion par la mesure de la force nécessaire pour arracher les boucles de la composition de caoutchouc, cette composition étant soit à température ambiante (20°C), soit à haute température (120°C) lors de cette mesure. Cette force est déterminée pour chaque boucle avec une vitesse de traction de 100 mm/min, et on calcule en fin d'opération la force moyenne par brin, en faisant une moyenne de 12 mesures.

**II - Préparation des monofilaments**

**A) Polymère**

Les monofilaments aramides sont réalisés à partir de polyamides aromatiques capables de générer des compositions de filage optiquement anisotropes à l'état fondu et au repos.

Chaque polyamide aromatique utilisé dans le procédé conforme à l'invention peut être un homopolymère ou un copolymère, ce polyamide comportant des enchaînements aromatiques et éventuellement non aromatiques. Ces enchaînements peuvent par exemple être formés de radicaux ou de groupements du type phénylène, biphénylène, diphényléther, naphtylène, pyridylène, vinylène, polyméthylène, polybenzamide, diaminobenzanilide, ces radicaux ou ces groupements pouvant être substitués et/ou non substitués, les substituants, lorsqu'ils sont présents, étant de préférence non réactifs. Ce polyamide peut éventuellement contenir des liaisons imides.

Le procédé conforme à l'invention peut être mis en oeuvre avec un mélange de tels polyamides. De préférence le polymère est un poly(p-phénylène téréphtalamide) (PPTA) ou un polyamide de type PPTA. Par ce terme on entend un polyamide comportant essentiellement des enchaînements p-phénylène téréphtalamide.

Les polyamides aromatiques utilisés dans les exemples qui suivent sont des poly(p-phénylène téréphtalamides), et des copolyamides de type PPTA, c'est-à-dire des copolyamides comportant essentiellement des enchaînements p-phénylène téréphtalamide, et des enchaînements supplémentaires, de nature aromatique ou aliphatique.

Les poly(p-phénylène téréphtalamides) sont préparés suivant la méthode connue suivante : dans un mélangeur balayé par un courant d'azote, équipé d'un agitateur et d'un dispositif de refroidissement, on introduit une solution de N-méthylpyrrolidone contenant un pourcentage en poids de chlorure de calcium supérieur à 5 %. Puis on ajoute sous agitation la p-phénylène diamine broyée. Après dissolution de la diamine, le contenu du mélangeur est refroidi à 10°C environ. On ajoute ensuite le dichlorure de téréphtaloyle broyé, en proportion sensiblement stoechiométrique, et on poursuit l'agitation. Tous les réactifs utilisés sont à la température ambiante (environ 20°C) avant introduction dans le réacteur. En fin de réaction, le mélangeur est vidé, le produit obtenu est coagulé avec de l'eau, lavé et séché.

Les copolyamides de type PPTA sont préparés suivant la méthode décrite ci-dessus, avec les modifications suivantes : on remplace une fraction molaire de p-phénylène diamine ou de dichlorure d'acide téréphtalique par une autre diamine ou un autre dichlorure d'acide, respectivement. Le ou les chlorures d'acide et la ou les diamines sont en proportions sensiblement stoechiométriques.

## B) Réalisation de la solution

La solution de filage est préparée suivant la méthode connue suivante :

De l'acide sulfurique concentré, d'une concentration en poids proche de 100 %, est introduit dans un mélangeur planétaire dont la double enveloppe est raccordée à un cryostat. Sous agitation et courant d'azote, l'acide est refroidi à une température inférieure d'au moins 10°C à sa température de cristallisation ; l'agitation est poursuivie jusqu'à formation d'une masse homogène ayant l'apparence de neige.

Le polymère est alors ajouté ; la température de ce dernier avant introduction dans le mélangeur n'est pas critique, de préférence le polymère se trouve à la température ambiante. Le mélange de l'acide et du polyamide se fait sous agitation, en maintenant la température du mélange à une valeur inférieure de 10°C à la température de cristallisation de l'acide, jusqu'à l'obtention d'une homogénéité suffisante. La température dans le mélangeur est alors progressivement augmentée jusqu'à température ambiante, tout en agitant. Une poudre solide, sèche et non cohésive est ainsi obtenue.

Dans le cas d'un procédé discontinu, cette solution solide peut être conservée à température ambiante sans risque de dégradation, avant l'opération de filage. On évite cependant toute exposition prolongée à une atmosphère humide.

Pratiquement, pour la réalisation des essais décrits ci-après, on mélange généralement à 8 kg d'acide sulfurique la quantité de polymère nécessaire pour obtenir la concentration désirée. Avant l'opération de filage, un échantillon de solution est prélevé et pesé. Il est ensuite coagulé, lavé soigneusement à l'eau, séché sous vide et pesé, afin de déterminer la concentration (% en poids, notée C ci-après) de polymère dans la solution.

Les compositions de filage décrites dans la présente demande sont optiquement anisotropes à l'état fondu et au repos, c'est-à-dire en l'absence de contrainte dynamique. De telles compositions dépolarisent la lumière lorsqu'on les observe à travers un microscope entre polariseurs linéaires croisés.

## C) Filage et traitement

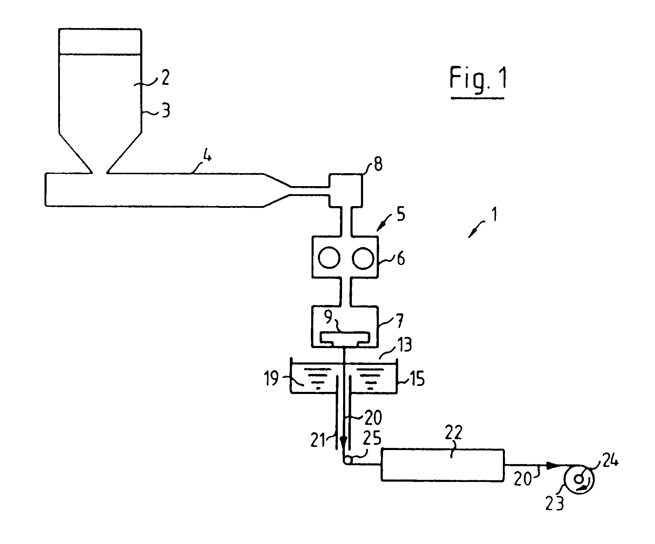

Les solutions obtenues suivant le procédé décrit au paragraphe précédent sont filées suivant la technique de filage dite à "couche de fluide non coagulante" (dry jet-wet spinning). La figure 1 représente un tel dispositif 1 de filage.

La solution de filage 2 solide, préalablement désaérée à la température ambiante dans un réservoir d'alimentation 3, est extrudée à l'aide d'un extrudeur monovis 4 vers le bloc de filage 5. Elle est fondue pendant cette phase d'extrusion, sous fort cisaillement, à une température généralement comprise entre 90 et 100°C.

Des séjours prolongés à une température notablement supérieure à 100°C, peuvent être la cause d'une dégradation du polymère, d'ailleurs aisément contrôlable par une mesure de viscosité inhérente V.I.(f) sur le monofilament. On utilise donc généralement avant le bloc 5 une température aussi basse que possible, mais suffisante pour garantir à la solution la fluidité nécessaire à son opération de filage. Pour ces raisons, la température de la solution de filage pendant son transfert vers le bloc de filage 5 est maintenue à une valeur inférieure à 110°C, et de manière préférentielle inférieure à 100°C.

Le bloc de filage 5 est essentiellement composé d'une pompe doseuse 6 et d'une tête de filage 7 à travers laquelle est extrudée la solution 2 liquide . Différents éléments tels que filtres, mélangeurs statiques par exemple peuvent être éventuellement incorporés dans le bloc 5, ou placés à l'entrée de ce dernier, la figure 1 représentant par exemple un dispositif de filtration 8. La température de la pompe de filage 6 est préférentiellement inférieure à 100°C pour les mêmes raisons que celles évoquées précédemment.

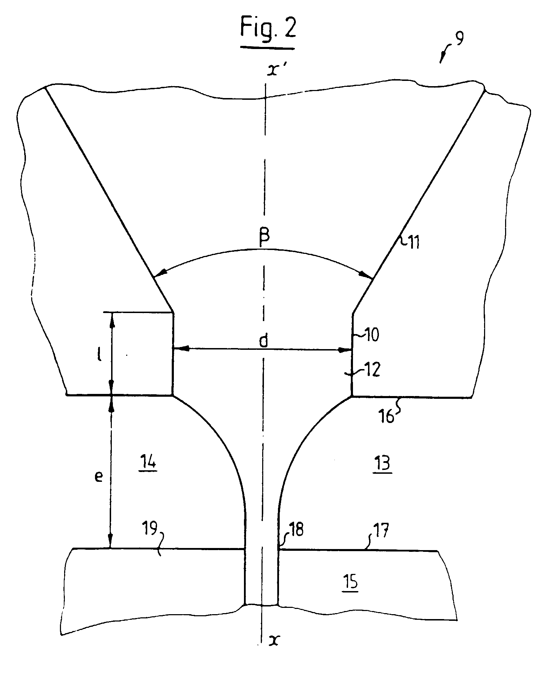

La tête de filage 7 est essentiellement composée de façon connue d'un répartiteur, de filtres, de joints et d'une filière, seule la filière 9 étant représentée à la figure 1 dans un but de simplification. Une portion de cette filière 9 est représentée plus en détail à la figure 2, elle comporte un capillaire cylindrique 10 de diamètre d et de longueur 1, précédé d'un convergent 11 d'angle β, ce dernier pouvant être précédé ou non d'un avant-trou cylindrique (non représenté sur la figure 2), la figure 2 étant une coupe de la filière 9 par un plan passant par l'axe xx' du capillaire 10, d étant déterminé dans un plan perpendiculaire à l'axe xx'.

La vitesse $V_1$ du jet 12 est la vitesse moyenne de passage de la solution 2 dans le capillaire 10 de la filière 9, elle peut être calculée à partir du volume de solution 2 passant à travers ce capillaire 10 par unité de temps.

La température de filage Tf est définie comme la température de la solution 2 lors de la traversée du capillaire 10.

Le jet 12 de liquide sortant de la filière 9 est étiré dans une couche non coagulante 13 de gaz 14, de préférence une couche d'air, avant de pénétrer dans le bain de coagulation 15 (Fig. 1 et 2). L'épaisseur "e" de la couche d'air, entre la face de sortie 16 de la filière 9, cette face étant disposée horizontalement, et la surface 17 du bain de coagulation 15 peut varier de quelques mm à plusieurs dizaines de mm.

Après traversée des champs d'orientation développés dans la filière 9 et dans la couche 13 d'air, au cours de laquelle une réorientation a été donnée aux molécules de polymère, la veine liquide étirée 18 ainsi obtenue pénètre dans le milieu coagulant 19 du bain 15 où l'on commence à figer cette structure orientée en contrecarrant au mieux les processus de relaxation moléculaire qui s'expriment pendant la phase de coagulation, et cela d'autant plus longtemps que le diamètre du monofilament à réaliser est élevé.

Dans tout ce qui suit et de manière très générale, on entend par coagulation le processus au cours duquel le fil se forme, c'est-à-dire au cours duquel le polyamide précipite ou cristallise, qu'il soit dans un état solvaté, partiellement solvaté, ou non solvaté. Par milieu coagulant, on entend un milieu liquide dans lequel s'effectue une telle transformation.

Le milieu coagulant 19 peut être composé au moins en partie d'eau ou de substances telles que des acides, des bases, des sels, ou des solvants organiques comme par exemple des alcools, des polyalcools, des cétones, ou d'un mélange de ces composés. De préférence le milieu coagulant est une solution aqueuse d'acide sulfurique.

En sortie du bain 15, le fil 20 en cours de formation est entraîné avec le milieu coagulant 19 dans le tube vertical 21 dont la longueur varie par exemple de quelques cm à quelques dizaines de cm et le diamètre intérieur est par exemple de quelques mm, ce tube pouvant être droit ou resserré par exemple à son extrémité inférieure. L'association du bain de coagulation 15 et de ce tube 21, dit parfois "tube de coagulation" ou "tube de filage", est connue de l'homme de l'art pour le filage de fibres aramides classiques. L'utilisation du tube 21 n'est cependant pas obligatoire dans le dispositif 1.

La profondeur de liquide coagulant 19, dans le bain de coagulation 15, mesurée entre la surface d'entrée 17 du bain de coagulation 15 et l'entrée du tube 21 de filage peut varier par exemple de quelques millimètres à plusieurs centimètres, une profondeur trop importante pouvant nuire à la qualité du produit, compte tenu des tensions hydrodynamiques qui peuvent se développer, en particulier aux vitesses de filage les plus élevées, à la traversée de cette première couche coagulante.

Une des caractéristiques essentielles du procédé conforme à l'invention réside dans le fait que les temps de contact dynamique du fil 20 avec le milieu coagulant 19 doivent être, dans la plupart des cas, notablement supérieurs aux temps de contact qui peuvent être atteints après simple traversée du bain 15 et du tube 21 de filage tels que précédemment décrits.

La prolongation de ces temps de contact pourra être faite par tout moyen convenable. A l'utilisation de bains de coagulation 15 et/ou de tube 21 de profondeur ou de longueur très importante, typiquement de plusieurs mètres, on préfère par exemple, compte tenu en particulier des problèmes de tension hydrodynamique évoqués ci-dessus, utiliser au moins un dispositif supplémentaire 22 de coagulation prolongeant le bain 15 et le tube 21, ce dispositif 22 étant placé en sortie du tube 21 de filage, immédiatement après un point de renvoi 25. Le dispositif 22 est par exemple composé de bains, tuyaux, cabines dans lesquels circule le milieu coagulant 19, ou d'une association de ces différents éléments qui ne sont pas représentés sur le dessin dans un but de simplification, et dont la longueur et la configuration peuvent être adaptées avec une grande souplesse aux conditions spécifiques de la fabrication, en particulier au diamètre du monofilament. De préférence, le fil 20 en cours de coagulation est soumis à des tensions inférieures à 3 cN/tex.

Le temps total "t" de contact dynamique du fil 20 avec le milieu coagulant 19 est exprimé en fonction du carré du diamètre monofilamentaire D du produit fini, suivant la relation :

$$t = KD^2 \; ;$$

t étant exprimé en seconde, D étant exprimé en millimètre et K en s/mm², K étant dite "constante de coagulation".

Par temps total de contact dynamique du fil 20 avec le milieu coagulant 19, on entend le temps total pendant lequel le monofilament est immergé dans le milieu coagulant ou au contact de ce même milieu, lors du passage du fil 20 dans les dispositifs de coagulation précédemment décrits, c'est-à-dire le bain 15, le tube 21 et le dispositif 22. Ces derniers doivent assurer un renouvellement efficace du milieu coagulant à la surface du monofilament en mouvement et en cours de formation, le milieu coagulant 19 étant à la température Tc . En cela, tout dispositif supplémentaire de coagulation tel que décrit ci-dessus ne peut être assimilé à un simple dispositif de lavage, dans lequel on pourrait par exemple utiliser des solutions aqueuses, neutres ou basiques, à température notablement élevée, pour améliorer la cinétique d'extraction du solvant résiduel après la phase de coagulation.

Dans le procédé conforme à l'invention, la constitution du milieu coagulant 19 et sa température Tc peuvent être choisies identiques ou différentes dans les dispositifs 15, 21 et 22.

Après la phase de coagulation réalisée dans les dispositifs 15, 21 et 22, le fil 20 formé est lavé pour éliminer l'acide résiduel qu'il contient, ce lavage est effectué de manière optimale par tout moyen connu, par exemple en lavant avec de l'eau, voire avec des solutions aqueuses alcalines, éventuellement à haute température pour améliorer la cinétique. Ce lavage peut être réalisé par exemple en recueillant le fil 20, à la sortie du dispositif 22, sur la bobine 23 actionnée par le moteur 24, cette bobine étant immergée pendant quelques heures dans un réservoir alimenté en permanence par de l'eau fraîche.

Le facteur d'étirage au filage FEF est défini comme le rapport entre la vitesse $V_2$ du premier dispositif d'entraînement rencontré par le fil 20 et la vitesse $V_1$ du jet 12 dans le capillaire 10, ce dispositif d'entraînement étant par exemple incorporé au dispositif 22.

Après lavage, le fil 20 est séché, par exemple soit sur bobine à température ambiante, voire dans un four, soit en faisant passer le fil sur des cylindres chauffants. De préférence la température de séchage est au plus égale à 200°C.

Le dispositif 1 pourrait être agencé pour que les opérations de lavage et de séchage soient conduites en continu avec les opérations d'extrusion et de coagulation.

De préférence dans le fil 20 sec, la teneur finale en acide sulfurique, ou en base si un liquide de lavage basique est utilisé, est inférieure à 0,01 % en poids par rapport au poids de fil sec.

Les monofilaments bruts de filage ainsi obtenus sont ensuite mis au contact d'un solvant de traitement capable de dissoudre rapidement leur surface de manière à produire une peau faiblement structurée. Un tel solvant est par exemple l'acide sulfurique, l'acide chlorosulfonique, l'acide fluosulfonique. De préférence, ce solvant de traitement est de l'acide sulfurique concentré, de concentration en poids proche de 100 %.

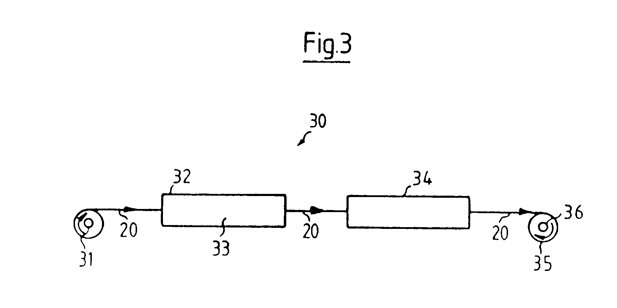

La figure 3 schématise un exemple possible d'un dispositif 30 de traitement. Le monofilament 20 à l'état brut de filage est extrait de sa bobine de stockage à l'aide d'un débobinoir 31 puis pénètre dans des moyens de traitement 32 contenant un solvant de traitement 33 capable de dissoudre rapidement la surface du monofilament 20. Les moyens de traitement 32 sont constitués par exemple par un bac ou une cabine dans lesquels repose ou circule le solvant 33. Le temps de contact du monofilament 20 avec le solvant 33 est noté Tt et la vitesse de traitement, c'est-à-dire la vitesse de défilement de ce monofilament 20 lors de ce contact, est notée Vt.

En sortie des moyens 32, le monofilament 20 traité est lavé avec de l'eau fraîche dans des moyens de lavage 34, composés par exemple de tuyaux, bacs ou cabines. La dissolution superficielle qui s'était produite au contact du solvant 33 est alors stoppée par élimination de ce solvant, il y a précipitation de la portion de polymère dissoute qui se trouve à la périphérie du monofilament 20, et formation d'une peau faiblement structurée.

A la sortie des moyens de lavage 34, le fil 20 peut être recueilli par exemple sur la bobine 35 actionnée par le moteur 36, puis séché à température ambiante, voire dans un four, sur cette bobine. Il peut encore être envoyé directement dans une cabine de séchage et séché sur des cylindres chauffants, les opérations de traitement, lavage et séchage étant alors réalisées en continu. De préférence, la température de séchage est au plus égale à 200°C.

Le fil 20 ainsi terminé a le diamètre D précédemment défini. De préférence, dans le fil 20 terminé, la teneur finale en solvant 33 est inférieure à 0,01 % en poids par rapport au poids de ce fil.

L'invention ne se limite pas à l'emploi de capillaires d'extrusion cylindriques, le procédé conforme à l'invention pouvant par exemple être mis en oeuvre avec des capillaires de forme conique, ou avec des trous d'extrusion non circulaires de différentes formes, par exemple des trous de forme rectangulaire ou ovale pour réaliser par exemple des monofilaments de type oblong. Dans ces conditions les définitions de l'invention données précédemment s'appliquent de façon très générale, le terme "diamètre D" représentant la plus petite dimension du monofilament, et le terme "diamètre d" la plus petite dimension du trou d'extrusion, D et d étant déterminés dans des sections perpendiculaires à l'axe de fibre ou à la direction d'écoulement dans le capillaire d'extrusion.

Divers additifs ou substances tels par exemple que des plastifiants, des lubrifiants, des produits pouvant améliorer l'adhésivité du produit à une matrice de gomme, peuvent éventuellement être incorporés au polymère, à la solution de filage, ou appliqués à la surface du monofilament, au cours des différentes étapes du procédé conforme à l'invention précédemment décrit.

## III - Exemples de réalisation

Le tableau 1 suivant donne des conditions de réalisation particulières de monofilaments conformes à l'invention, en utilisant le procédé précédemment décrit. Ce tableau donne également le diamètre D, exprimé en $\mu m$, de ces monofilaments. Ce tableau comporte 23 exemples référencés de A-1 à Q-1. Pour certains de ces exemples, les conditions de réalisation n'ont été modifiées que dans le dispositif 30 de traitement ; ces exemples ont été alors regroupés dans une même série (E, F ou J).

### A - Synthèse des polyamides aromatiques utilisés

Le polymère utilisé est du poly(p-phénylène téréphtalamide) sauf dans les exemples M1 à P1 où l'on utilise des copolyamides de type PPTA synthétisés en remplaçant une fraction molaire de p-phénylène diamine (PPDA) ou de dichlorure d'acide téréphtalique (DCAT) par des monomères de substitution, tous disponibles dans le commerce et qui sont fabriqués selon des procédés connus qui ne sont pas décrits ici dans un but de simplification. La pureté de ces monomères est donnée par les fournisseurs comme étant supérieure à 97 % et ils sont utilisés sans purification supplémentaire.

Au total, 4 copolyamides aromatiques différents sont préparés selon le schéma suivant :

- Exemple M-1 : monomères : PPDA, DCAT, dichlorure d'acide adipique (DCAA), avec 1 mole de DCAA pour 100 moles de dichlorures d'acides ;

- Exemple N-1 : monomères : PPDA, DCAT, DCAA, avec 3 moles de DCAA pour 100 moles de dichlorures d'acides ;

- Exemple O-1 : monomères : PPDA, DCAT, 1,5-naphtylène diamine (NDA), avec 3 moles de NDA pour 100 moles de diamines ;

- Exemple P-1 : monomères : PPDA, DCAT, dichlorure d'acide fumarique (DCAF) avec 3 moles de DCAF pour 100 moles de dichlorures d'acides.

### B - Réalisation des solutions de filage, filage et traitement des monofilaments

On procède de la façon suivante :

- On utilise pour la mise en solution du polymère un acide sulfurique d'une concentration en poids comprise entre 99,5 % et 100,5 % environ.

- La température de l'extrudeur 4 et celle de la pompe de filage 6 sont comprises entre 90 et 100°C.

- On utilise des capillaires d'extrusion cylindriques, sauf dans l'exemple Q1 où la section droite du capillaire (c'est-à-dire perpendiculaire à l'axe xx') est de forme ellipsoïdale, le paramètre d représentant alors la plus petite dimension du capillaire, et la plus grande dimension du capillaire étant de 2000 $\mu m$, dans cette section.

- La couche non coagulante 13 est une couche d'air.

- Le milieu coagulant 19 est une solution aqueuse d'acide sulfurique contenant moins de 5 % en poids d'acide, sauf dans les exemples K-1, L-1, M-1, O-1 où l'on utilise d'autres milieux coagulants.

Plus précisément, on utilise dans le premier dispositif de coagulation constitué par le bain 15 et le tube 21 qui lui est associé, les substances suivantes :

exemple K-1 : solution aqueuse d'acide sulfurique contenant 25 % en poids d'acide, maintenue à une température de + 7°C.

exemple L-1 : éthylène glycol maintenu à une température de - 8°C.

exemple M-1 : solution aqueuse d'acide sulfurique contenant 25 % en poids d'acide, maintenue à une température de - 10°C.

exemple O-1 :  solution aqueuse d'acide sulfurique contenant 18 % en poids d'acide, maintenue à une température de - 5°C.

Dans les exemples K-1, L-1 et M-1, le milieu coagulant utilisé dans le dispositif supplémentaire 22 de coagulation est une solution aqueuse d'acide sulfurique contenant moins de 5 % en poids d'acide et maintenue à une température de + 7°C, alors que dans l'exemple O-1, la composition et la température du milieu coagulant restent inchangées par rapport à celles utilisées dans les dispositifs 15 et 21.

Dans les exemples de réalisation L-1 et M-1, on peut remarquer que la température du milieu coagulant Tc n'est pas maintenue constante pendant la traversée des dispositifs 15, 21 et 22. Néanmoins, cette température reste toujours conforme à l'invention puisque au plus égale à + 7°C.

- Le monofilament 20 est prélevé directement en sortie du dispositif 22 de coagulation sur la bobine 23. La longueur de monofilament sur la bobine prélevée est variable mais toujours supérieure à 1000 mètres (par exemple supérieure à 5000 m pour tous les exemples référencés de C-1 à G-1).

- Les bobines sont ensuite immergées quelques heures dans un réservoir alimenté en permanence par de l'eau fraîche pour lavage, avant l'opération de séchage.

- Les monofilaments ainsi lavés sont, via un dispositif de débobinage, séchés par passage sur des cylindres chauffés à une température comprise entre 140°C et 170°C, et enroulés sur une bobine réceptrice.

- Le solvant 33 est de l'acide sulfurique concentré à 99,5 % environ.

- Les moyens de traitement 32 comportent un bac en polypropylène aux extrémités duquel sont fixées deux séries de poulies en téflon. Ces poulies, assemblées parallèlement, tournent indépendamment l'une de l'autre, entrainées par le fil 20, leur partie inférieure baignant dans l'acide. Elles guident ce fil 20 qui effectue des aller-retours entre les deux extrémités du bac. Le temps Tt de contact du fil 20 avec le solvant 33 peut être ajusté par le nombre de poulies utilisées et/ou par la vitesse Vt de passage du monofilament dans les moyens 32.

- Les moyens de lavage 34 comportent un tuyau de polypropylène, dans lequel circule de l'eau fraîche à contre-courant, prolongé par une cabine de lavage où le monofilament 20 est alors enroulé sur des cylindres motorisés et douché à l'eau. La température de l'eau de lavage est comprise entre 8 et 12°C. Pour de telles conditions, un temps de lavage au moins égal au temps Tt permet d'éliminer complètement le solvant 33.

- Le monofilament 20 traité et lavé est prélevé en sortie des moyens de lavage 34 sur la bobine 35, il est ensuite séché, via un dispositif de débobinage, par passage sur des cylindres chauffés à une température comprise entre 140°C et 170°C et enroulé sur une bobine réceptrice, sauf dans le cas de l'exemple D-1 où le monofilament sortant des moyens de lavage 34 est envoyé directement sur des cylindres chauffants pour séchage, les opérations de traitement, de lavage et de séchage étant alors réalisées en continu. La longueur de monofilament sur la bobine réceptrice finale est variable mais toujours supérieure à 500 m (par exemple supérieure à 4000 m pour les exemples C-1 et G-1).

Les abréviations et unités utilisées dans le tableau 1 sont les suivantes :

No :  numéro d'essai ;
V.I.(p) :  viscosité inhérente du polymère (en dl/g) ;
C :  concentration de polymère dans la solution (% en poids) ;
d :  diamètre du capillaire de la filière (en μm) ;
l/d :  rapport longueur sur diamètre du capillaire, 1 étant la longueur du capillaire en μm ;
β :  angle d'ouverture du convergent précédant le capillaire (en degrés) ;
Tf :  température de filage (en degrés Celsius) ;
e :  épaisseur de la couche non coagulante (en mm) ;
$V_2$ :  vitesse d'enroulement (en m/min) ;
FEF :  facteur d'étirage au filage ;
Tc :  température du milieu coagulant (en degrés Celsius) ;

t : temps de contact dynamique avec le milieu coagulant (en s) ;
K : constante de coagulation (en s/mm$^2$) ;
Vt : vitesse de traitement (en m/min) ;
Tt : temps de contact avec le solvant de traitement (en s) ;
D : diamètre du monofilament en micromètres (µm).

Tableau 1

| No | V.I. (p) | C | d | 1/d | β | Tf | e | V$_2$ | FEF | Tc | t | K | Vt | Tt | D |
|---|---|---|---|---|---|---|---|---|---|---|---|---|---|---|---|
| A-1 | 5,3 | 20,4 | 400 | 2 | 60 | 85 | 10 | 300 | 2,6 | 8 | 6,1 | 403 | 60 | 14 | 123 |
| B-1 | 5,4 | 20,6 | 800 | 2 | 60 | 80 | 10 | 200 | 7,6 | 8 | 9,2 | 444 | 50 | 30 | 144 |
| C-1 | 6,3 | 20,4 | 1200 | 2 | 60 | 86 | 10 | 200 | 10,9 | 8 | 11,4 | 360 | 80 | 30 | 178 |
| D-1 | 6,1 | 20,4 | 1200 | 2 | 60 | 85 | 10 | 200 | 10,8 | 6 | 11,4 | 356 | 80 | 30 | 179 |
| E-1 | 6,3 | 20,3 | 1200 | 2 | 65 | 86 | 12 | 200 | 10,9 | 8 | 11,4 | 348 | 120 | 20 | 181 |
| E-2 | 6,3 | 20,3 | 1200 | 2 | 65 | 86 | 12 | 200 | 10,9 | 8 | 11,4 | 344 | 80 | 30 | 182 |
| E-3 | 6,3 | 20,3 | 1200 | 2 | 65 | 86 | 12 | 200 | 10,9 | 8 | 11,4 | 340 | 40 | 60 | 183 |
| F-1 | 6,1 | 20,4 | 1000 | 2 | 65 | 85 | 10 | 200 | 7,6 | 6 | 11,4 | 344 | 120 | 10 | 182 |
| F-2 | 6,1 | 20,4 | 1000 | 2 | 65 | 85 | 10 | 200 | 7,7 | 6 | 11,4 | 348 | 60 | 20 | 181 |
| F-3 | 6,1 | 20,4 | 1000 | 2 | 65 | 85 | 10 | 200 | 7,5 | 6 | 11,4 | 340 | 40 | 30 | 183 |
| F-4 | 6,1 | 20,4 | 1000 | 2 | 65 | 85 | 10 | 200 | 7,5 | 6 | 11,4 | 340 | 20 | 60 | 183 |
| G-1 | 6,1 | 20,4 | 1000 | 2 | 65 | 91 | 10 | 200 | 7,7 | 6 | 11,4 | 348 | 60 | 25 | 181 |
| H-1 | 5,6 | 20,7 | 1400 | 2 | 60 | 86 | 12 | 150 | 10,3 | 9 | 15,2 | 317 | 50 | 30 | 219 |
| I-1 | 5,2 | 20,0 | 1800 | 2 | 60 | 90 | 12 | 90 | 7,6 | 7 | 25,3 | 253 | 25 | 96 | 316 |
| J-1 | 6,4 | 20,4 | 1800 | 2 | 60 | 92 | 10 | 100 | 4,9 | 7 | 22,8 | 135 | 50 | 30 | 411 |
| J-2 | 6,4 | 20,4 | 1800 | 2 | 60 | 92 | 10 | 100 | 5,0 | 7 | 22,8 | 140 | 19 | 157 | 404 |
| K-1 | 5,9 | 20,5 | 1100 | 2 | 65 | 86 | 12 | 150 | 7,2 | 7 | 15,2 | 365 | 65 | 30 | 204 |
| L-1 | 5,9 | 20,2 | 1100 | 2 | 65 | 86 | 12 | 150 | 6,8 | ≤7 | 15,2 | 358 | 65 | 30 | 206 |
| M-1 | 5,5 | 20,1 | 800 | 2 | 60 | 90 | 10 | 300 | 10,2 | ≤7 | 7,5 | 496 | 60 | 20 | 123 |
| N-1 | 5,7 | 20,1 | 900 | 2 | 60 | 85 | 12 | 150 | 4,2 | 7 | 15,2 | 332 | 65 | 30 | 214 |
| O-1 | 5,6 | 20,5 | 900 | 2 | 60 | 90 | 12 | 200 | 5,6 | -5 | 11,4 | 323 | 65 | 30 | 188 |
| P-1 | 5,1 | 20,5 | 900 | 2 | 60 | 85 | 12 | 300 | 8,3 | 8 | 7,6 | 329 | 60 | 20 | 152 |
| Q-1 | 5,8 | 20,2 | 800 | 4 | 65 | 85 | 4 | 220 | 12,3 | 3 | 10,0 | 756 | 85 | 20 | 115 |

Les propriétés physiques et mécaniques des monofilaments obtenus sont données dans le tableau 2 suivant, la signification des symboles et les unités utilisées étant les suivantes :

No : numéro d'essai ;
D : diamètre (en µm) ;
Ti : titre (en tex) ;
T : ténacité (en cN/tex) ;
Ar : allongement à la rupture (en %) ;
Mi : module initial (en cN/tex) ;
Er : énergie à la rupture par unité de masse (en J/g) ;
V.I.(f) : viscosité inhérente (en dl/g) ;
ρ : masse volumique (en g/cm$^3$).

Dans l'exemple Q-1, le diamètre D représente la plus petite dimension du monofilament oblong dans une section perpendiculaire à son axe longitudinal, sa plus grande dimension dans cette même section étant égale à 350 µm environ.

Ces deux dimensions sont mesurées par microscopie optique sur une coupe transversale du monofilament, cette coupe étant orientée selon une section perpendiculaire à l'axe longitudinal, le monofilament étant préalablement enrobé dans une résine de type époxy pour faciliter l'opération de coupe.

Tableau 2

| No | D | Ti | T | Ar | Mi | Er | V.I.(f) | ρ |
|---|---|---|---|---|---|---|---|---|
| A-1 | 123 | 16,8 | 159 | 3,93 | 5536 | 32,7 | 4,7 | 1,421 |
| B-1 | 144 | 22,9 | 150 | 4,17 | 5060 | 32,4 | 4,9 | 1,414 |
| C-1 | 178 | 35,5 | 162 | 4,40 | 5197 | 35,6 | 5,6 | 1,419 |
| D-1 | 179 | 35,7 | 155 | 4,32 | 5148 | 34,6 | 5,4 | 1,417 |
| E-1 | 181 | 36,6 | 157 | 4,32 | 4895 | 33,9 | 5,8 | 1,416 |
| E-2 | 182 | 36,9 | 157 | 4,43 | 4908 | 34,7 | 5,8 | 1,413 |
| E-3 | 183 | 36,9 | 151 | 4,57 | 4580 | 34,4 | 5,9 | 1,407 |
| F-1 | 182 | 37,0 | 162 | 4,29 | 5143 | 34,9 | 5,6 | 1,423 |
| F-2 | 181 | 36,4 | 169 | 4,52 | 5072 | 38,1 | 5,5 | 1,419 |
| F-3 | 183 | 37,5 | 162 | 4,51 | 4936 | 36,9 | 5,6 | 1,418 |
| F-4 | 183 | 37,2 | 154 | 4,51 | 4873 | 35,2 | 5,5 | 1,414 |
| G-1 | 181 | 36,5 | 160 | 4,58 | 5030 | 37,1 | 5,5 | 1,419 |
| H-1 | 219 | 53,6 | 123 | 3,79 | 4577 | 24,1 | 5,1 | 1,421 |
| I-1 | 316 | 110,1 | 75 | 3,23 | 3391 | 12,9 | 4,8 | 1,405 |
| J-1 | 411 | 185,9 | 53 | 2,50 | 2872 | 7,1 | 5,3 | 1,404 |
| J-2 | 404 | 181,5 | 48 | 2,64 | 2558 | 6,8 | 5,3 | 1,416 |
| K-1 | 204 | 46,4 | 137 | 3,88 | 4989 | 27,4 | 5,7 | 1,422 |
| L-1 | 206 | 47,2 | 127 | 3,71 | 4722 | 24,3 | 5,7 | 1,421 |
| M-1 | 123 | 16,8 | 149 | 4,05 | 5001 | 31,5 | 5,0 | 1,420 |
| N-1 | 214 | 51,0 | 112 | 3,71 | 4369 | 21,8 | 5,4 | 1,418 |
| O-1 | 188 | 39,3 | 133 | 3,71 | 4816 | 25,4 | 5,3 | 1,417 |
| P-1 | 152 | 25,9 | 136 | 3,80 | 4707 | 26,4 | 4,7 | 1,422 |
| Q-1 | 115 | 35,3 | 166 | 4,26 | 5269 | 35,7 | 5,6 | 1,424 |

Les monofilaments ainsi obtenus sont conformes à l'invention car ils vérifient tous les relations suivantes :

$1,7 \leq Ti \leq 260$ ;
$40 \leq D \leq 480$ ;
$T \geq 180 - D/3$ ;
$Mi \geq 1600$ ;
$Ar > 2,00$
$Er > 20,0 - D/30$.

De manière préférentielle, ces monofilaments vérifient les relations suivantes :

$T \geq 200 - D/3$ ;
$Mi \geq 6400 - 10D$ ;
$Ar > 3,00$ ;
$Er > 30,0 - D/30$.

De manière encore plus préférentielle, ils vérifient les relations suivantes :

$T \geq 220 - D/3$ ;
$Mi \geq 6800 - 10D$ ;
$Ar > 4,00$ ;
$Er > 40,0 - D/30$.

On constate même que pour certains exemples de réalisation une au moins des relations suivantes est vérifiée :

$T \geq 225 - D/3$ ;

Ar > 4,50 ;

Er > 42,5 - D/30.

De manière préférentielle, on a les relations suivantes :
$4,0 \leq Ti \leq 260 ; 60 \leq D \leq 480$.

Les monofilaments conformes à l'invention se caractérisent en outre par des valeurs élevées de viscosité inhérente V.I.(f), toutes supérieures à 4,0 dl/g, de préférence au moins égales à 4,5 dl/g, et de manière encore plus préférentielle au moins égales à 5,0 dl/g.

Ces monofilaments possèdent également une masse volumique $\rho$ élevée puisque supérieure à 1,380 g/cm$^3$, de préférence supérieure à 1,400 g/cm$^3$.

Ces monofilaments conformes à l'invention possèdent donc de hautes caractéristiques physiques et mécaniques.

Leurs valeurs d'allongement à la rupture sont par exemple supérieures, pour la plupart, à celles décrites dans un grand nombre de brevets ou demandes de brevets pour des fibres multifilamentaires classiques, ou des filaments de faible diamètre, en PPTA (voir par exemple EP-A-21 484, EP-A-168 879, EP-A-248 458, US-A-3 869 430, US-A-4 698 414, US-A-4 702 876, US-A-4 721 755, US-A-4 726 922, US-A-4 835 223, US-A-4 869 860).

De manière tout à fait inattendue, on constate que les monofilaments de diamètre aussi élevé que 180 μm peuvent posséder, en raison de leurs hautes valeurs d'allongement à la rupture et de ténacité, des énergies à la rupture par unité de masse qui peuvent être du même ordre de grandeur, voire même plus élevées, que celles décrites pour des fibres ou des filaments classiques en PPTA (voir par exemple US-A-3 869 430, US-A-4 698 414, US-A-4 726 922).

Les valeurs de module initial et de ténacité sont très élevées pour des diamètres monofilamentaires aussi importants. On note en particulier des ténacités au moins égales à 150 cN/tex pour tous les exemples de monofilaments en PPTA dont le diamètre D est inférieur à 200 μm, supérieures à 160 cN/tex pour certains d'entre eux. Pour ces mêmes exemples, le module initial Mi est toujours supérieur à 4500 cN/tex.

Les monofilaments conformes à l'invention se caractérisent par une peau faiblement structurée. Cette peau s'étend depuis la surface du monofilament jusqu'à une profondeur qui varie de quelques dixièmes de micromètre à quelques micromètres, par exemple, en fonction du temps de contact (Tt) avec le solvant de traitement.Le caractère faiblement structuré de cette peau peut être mis en évidence par des analyses de microdiffraction électronique effectuées sur des coupes longitudinales de ces monofilaments.

Quel que soit l'endroit analysé (partie de la coupe correspondant à la peau du monofilament ou partie correspondant au coeur du monofilament), les monofilaments bruts de filage, tels que décrits dans la demande PCT/CH90/00155, se caractérisent toujours par un spectre de diffraction comportant de nombreuses taches intenses et très bien définies, typique d'une structure fortement cristallisée et orientée.

De telles taches sont absentes d'un spectre de microdiffraction réalisé à la peau des monofilaments conformes à l'invention, un tel spectre ne comportant tout au plus que quelques taches très diffuses, mal définies et en nombre très limité, révélatrices d'un état faiblement structuré.

Au coeur des monofilaments conformes à l'invention, le spectre de microdiffraction est typique d'une structure fortement cristallisée et orientée, tel que défini ci-dessus pour des monofilaments bruts de filage.

Des observations en microscopie optique faites en lumière polarisée sur des coupes transversales de ces monofilaments conformes à l'invention, confirment également une structure très différente à coeur et à peau.

La peau des monofilaments conformes à l'invention s'est avérée constituer une véritable gaine de protection pour ces monofilaments, leur conférant notamment une résistance à la fibrillation et à l'abrasion fortement améliorée, comparée à celle des monofilaments bruts de filage.

Pour apprécier la résistance à la fatigue et à l'abrasion de fibres, il est connu d'utiliser un test de friction "filament contre filament", dans lequel un filament dynamique abrase transversalement et de manière répétitive un filament statique, ces deux filaments étant maintenus sous tension, le filament dynamique étant en outre courbé autour du filament statique selon un angle de 90 degrés environ. Ce type de test a été utilisé notamment pour des filaments aramides classiques de faible diamètre (voir par exemple EP-A-218 269, US-A 4 721 755).

Certains des monofilaments conformes à l'invention des exemples précédents ont été soumis à un tel test d'auto-abrasion sous courbure à l'aide du dispositif décrit en détail au paragraphe I du chapitre I, et leur réponse au test a été comparée à celle du monofilament à l'état brut de filage correspondant, c'est-à-dire sans traitement de surface. Lors de cette étude comparative, ce test a été réalisé suivant les conditions particulières suivantes :

- les tensions T1 et T2 au début du test sont respectivement égales à 2,5 cN/tex et 1,25 cN/tex environ ;
- le filament dynamique abrase le filament statique à raison de 50 cycles par minute, selon un mouvement de va-et-vient d'amplitude 30 mm environ.

Les résultats sont donnés dans le tableau 3 qui suit, les abréviations utilisées étant les suivantes :

- No : numéro d'essai (correspondant à certains exemples du tableau 1) ;
- N1 : nombre moyen de cycles d'auto-abrasion enregistré jusqu'à la rupture pour le monofilament brut de filage ;
- N2 : nombre moyen de cycles d'auto-abrasion enregistré jusqu'à la rupture pour le monofilament conforme à l'invention.

Tableau 3

| No | N1 | N2 |
|-----|-----|-----|
| A-1 | 188 | 273 |
| B-1 | 285 | 418 |
| E-1 | 359 | 522 |
| E-2 | 359 | 584 |
| E-3 | 359 | 733 |
| F-2 | 293 | 462 |
| F-3 | 293 | 508 |
| H-1 | 195 | 307 |

Quel que soit l'exemple considéré, on constate que le nombre de cycles d'auto-abrasion supporté par le monofilament conforme à l'invention (N2) est toujours supérieur de 45 % au moins au nombre de cycles supporté par le monofilament brut de filage correspondant (N1), N2 pouvant même être supérieur de plus de 100 % à N1 dans le cas de l'exemple E-3 correspondant à un temps Tt de contact avec le solvant de traitement égal à 60 s.

Cette meilleure tenue à la fatigue et à l'abrasion des monofilaments conformes à l'invention s'explique notamment par une excellente résistance à la fibrillation.

Les monofilaments bruts de filage présentent généralement une surface irrégulière et cannelée, facilement caractérisable au microscope électronique à balayage, cette surface étant d'autant plus accidentée en règle générale que le diamètre monofilamentaire est important. La surface de ces monofilaments possède une cohésion faible et on peut y observer des phénomènes fréquents de fibrillation.

Les monofilaments conformes à l'invention se caractérisent quant à eux par une surface beaucoup plus lisse et plus régulière, dépourvue par ailleurs de fibrillation.

Un examen au microscope électronique à balayage montre par exemple qu'après 200 cycles d'auto-abrasion subis, selon les conditions décrites précédemment, par le monofilament conforme à l'invention de l'exemple F-3, la surface du filament dynamique qui était au contact du filament statique apparaît encore quasi intacte et dépourvue de fibrillation. Dans le cas du monofilament brut de filage correspondant ayant subi les 200 cycles d'abrasion, cette surface a au contraire éclaté et cédé la place à une structure très fortement fibrillée.

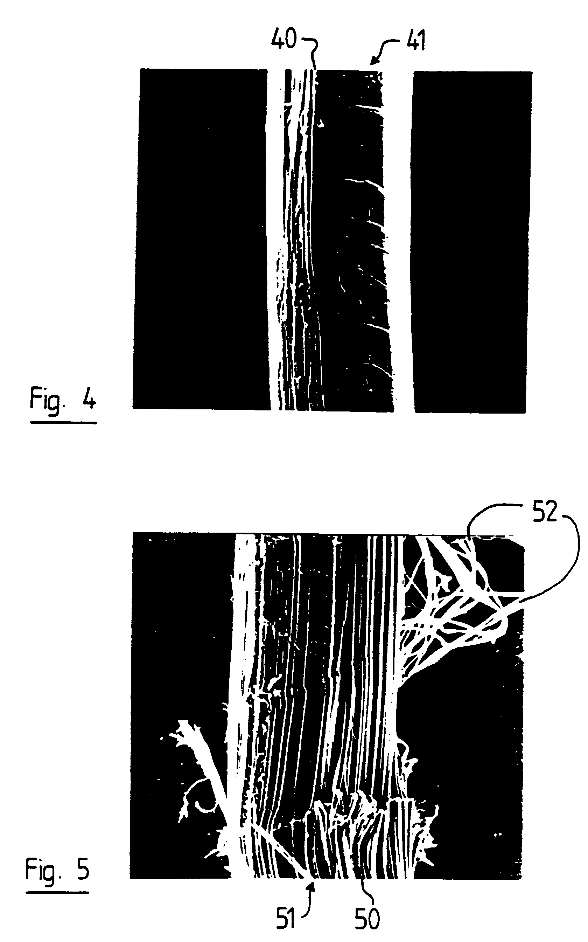

La figure 4 représente cette surface 40 du filament dynamique 41 dans le cas du monofilament F-3 conforme à l'invention, et la figure 5 représente cette structure 50 fortement fibrillée du filament dynamique 51, dans le cas du monofilament brut de filage correspondant, certaines des fibrilles étant référencées 52.

Les monofilaments conformes à l'invention se caractérisent donc par une haute résistance à l'abrasion et à la fibrillation, comparée à celle des monofilaments bruts de filage.

En outre et de manière tout à fait inattendue, on constate que le traitement de surface auquel sont soumis les monofilaments conformes à l'invention s'accompagne le plus souvent d'une amélioration de certaines propriétés mécaniques, par rapport à celles des monofilaments bruts de filage ; il s'agit en premier lieu de l'allongement à la rupture et de l'énergie à la rupture, et également de la ténacité.

Pour illustrer cela, on a sélectionné, parmi les exemples du tableau 2 précédent, les monofilaments présentant la meilleure combinaison de propriétés mécaniques en terme de ténacité, d'allongement à la rupture et d'énergie à la rupture, et on a comparé ces propriétés finales à celles obtenues juste avant le traitement de surface, c'est-à-dire sur les monofilaments bruts de filage correspondants. Ce tableau 4 donne également le diamètre Do de ces monofilaments bruts de filage, ainsi que le diamètre D des monofilaments conformes à l'invention. Le diamètre Do et les propriétés mécaniques des monofilaments bruts de filage ont été mesurés ou calculés suivant les méthodes décrites au chapitre I. A la précision de mesure ou de calcul près, les diamètres Do et D sont identiques.

Les abréviations et unités utilisées dans ce tableau 4 sont les suivantes :

- No : numéro d'essai (correspondant à certains exemples du tableau 1) ;
- Do : diamètre (en µm) du monofilament brut de filage ;

- To : ténacité (en cN/tex) du monofilament brut de filage ;
- (Ar)o : allongement à la rupture (en %) du monofilament brut de filage ;
- (Er)o : énergie à la rupture par unité de masse (en J/g) du monofilament brut de filage ;
- D : diamètre (en µm) du monofilament conforme à l'invention ;
- T : ténacité (en cN/tex) du monofilament conforme à l'invention ;
- Ar : allongement à la rupture (en %) du monofilament conforme à l'invention ;
- Er : énergie à la rupture par unité de masse (en J/g) du monofilament conforme à l'invention.

Tableau 4

| No | Do | To | (Ar)o | (Er)o | D | T | Ar | Er |
|---|---|---|---|---|---|---|---|---|
| C-1 | 181 | 141 | 3,62 | 25,2 | 178 | 162 | 4,40 | 35,6 |
| D-1 | 182 | 148 | 3,91 | 28,3 | 179 | 155 | 4,32 | 34,6 |
| E-2 | 181 | 156 | 4,00 | 30,2 | 182 | 157 | 4,43 | 34,7 |
| E-3 | 181 | 156 | 4,00 | 30,1 | 183 | 151 | 4,57 | 34,4 |
| F-1 | 182 | 151 | 4,02 | 29,8 | 182 | 162 | 4,29 | 34,9 |
| F-2 | 182 | 150 | 4,01 | 29,2 | 181 | 169 | 4,52 | 38,1 |
| F-3 | 182 | 151 | 4,02 | 29,8 | 183 | 162 | 4,51 | 36,9 |
| F-4 | 182 | 147 | 3,89 | 28,0 | 183 | 154 | 4,51 | 35,2 |
| G-1 | 181 | 142 | 3,94 | 27,6 | 181 | 160 | 4,58 | 37,1 |

Les monofilaments bruts de filage de ce tableau 4 se caractérisent par de très hautes propriétés mécaniques puisqu'ils vérifient tous au moins l'une des relations suivantes :

To ≥ 210 - Do/3 ;
(Ar)o > 4,0 ;
(Er)o > 30,0 - Do/30.

Dans la plupart des cas, leur ténacité To et leur allongement à la rupture Ar(o) satisfont notamment aux meilleures relations préférentielles revendiquées pour des monofilaments aramides bruts de filage dans la demande internationale PCT/CH90/00155 précitée.

Ces très hautes propriétés restent malgré tout inférieures à celles des monofilaments conformes à l'invention. A la lecture du tableau 4, on constate en effet que, quel que soit l'exemple considéré, l'allongement à la rupture et l'énergie à la rupture des monofilaments traités sont toujours supérieurs à ceux des produits bruts de filage correspondants ; la ténacité également est toujours améliorée, exception faite pour l'exemple E-3 correspondant à un temps Tt de contact avec le solvant de traitement égal à 60 s. Après traitement, le gain sur l'énergie à la rupture notamment est toujours supérieur à 10 %, pouvant même atteindre plus de 30 % pour les exemples C-1, F-2 et G-1.

En particulier, les monofilaments conformes à l'invention de ces exemples du tableau 4 vérifient tous au moins l'une des relations ci-dessous, au moins deux dans la majorité des cas, et même les trois simultanément dans le cas des exemples F-2, F-3 et G-1 :

T ≥ 220 - D/3 ;
Ar > 4,50 ;
Er > 40,0 - D/30 ;

alors qu'aucun des monofilaments bruts de filage correspondants ne vérifie au moins l'une des relations équivalentes, c'est-à-dire :

To ≥ 220 - Do/3 ;
(Ar)o > 4,50 ;
(Er)o > 40,0 - Do/30.

Le procédé conforme à l'invention permet donc de réaliser des monofilaments aramides qui possèdent non seulement une haute résistance à l'abrasion et à la fibrillation, mais également de hautes ou de très hautes propriétés mécaniques, et en particulier une énergie à la rupture élevée. Dans la majorité des cas, la ténacité et l'allongement à la rupture de ces monofilaments sont, à diamètre identique, supérieurs à ceux des monofilaments aramides décrits dans la demande PCT/CH90/00155 précitée.

De préférence, dans le procédé conforme à l'invention, on a au moins une des relations suivantes qui est vérifiée :

$V.I.(p) \geq 5,3$ dl/g ;
$C \geq 20,2$ % ;
$Tf \leq 90°C$ ;
$Tc \leq 10°C$ ;
$K \geq 200$ s/mm$^2$ ;
$1/d \leq 10$ ;
5 degrés $\leq \beta \leq 90$ degrés ;
3 mm $\leq e \leq 20$ mm ;
$2 \leq FEF \leq 15$ ;
$Tt \geq 5s$.

De préférence les viscosités inhérentes V.I.(f) et V.I.(p), exprimées en dl/g, sont liées par la relation :
$V.I.(f) \geq V.I.(p) - 1,2$,
la dégradation du polymère au cours des différentes étapes de mise en solution, de filage et de traitement du monofilament, restant ainsi très limitée.

En outre, on constate que la peau faiblement structurée des monofilaments conformes à l'invention permet d'obtenir, après traitements d'enduction, une meilleure adhésion aux compositions de caoutchoucs que celle obtenue, dans les mêmes conditions d'enduction, avec les monofilaments à l'état brut de filage, comme les exemples suivants le montrent.

Pour déterminer l'adhésion des monofilaments conformément à la procédure décrite au § J du chapitre I, on réalise tout d'abord des assemblages de ces monofilaments. Ces assemblages sont des câblés qui ont la formule (1+5)18 et (1+6)18, c'est-à-dire qu'ils sont constitués dans le premier cas de six monofilaments (un monofilament servant d'âme, une couche de cinq monofilaments s'enroulant en hélice autour de l'âme) et dans le deuxième cas de sept monofilaments (un monofilament servant d'âme, une couche de six monofilaments s'enroulant en hélice autour de l'âme). Tous ces monofilaments sont en PPTA et ils ont un diamètre de 180 μm. L'angle aigu que fait chaque monofilament des couches avec l'axe de l'assemblage est d'environ 6°, le diamètre des assemblages étant d'environ 540 μm et chacun des monofilaments étant pratiquement dépourvu de torsion sur lui-même.

Les assemblages utilisés sont de quatre types :

Type A :    (1+6)18 ; monofilaments à l'état brut de filage, non conformes à l'invention, préparés selon la demande internationale PCT/CH90/00155.

Type B :    (1+6)18 ; monofilaments conformes à l'invention, le temps de contact avec le solvant de traitement (acide sulfurique concentré à 99,5 % environ) étant de 30 secondes ;

Type C :    (1+5)18 ; monofilaments identiques à ceux du type B ;

Type D :    (1+5)18 ; monofilaments conformes à l'invention, le temps de contact avec le solvant de traitement (acide sulfurique concentré à 99,5 % environ) étant de 60 secondes.

Préalablement au test d'adhésion, les assemblages sont soumis aux traitements d'enduction suivants.
Les assemblages passent dans un premier bain dont la composition est la suivante (parties en poids) :

- Résine époxy (1)        5,0
- Aérosol (2)        0,3
- Soude NaOH        0,3
- Eau        994,4

Les assemblages subissent ensuite un traitement thermique entre 210 et 260°C, par exemple à 250°C, pendant un temps compris entre 20 et 120 secondes, par exemple 30 secondes.
On les fait ensuite passer dans un deuxième bain dont la composition est la suivante (parties en poids) :

(1) résine de dénomination DENACOL EX 512 de la Société NAGASE
(2) aérosol de dénomination OT de la Société American Cyanamid

| Latex VP 41 % (1) | 319 |
|---|---|
| Ammoniaque | 25 |
| Résine d'encollage | 149 |
| Eau | 507 |

(1) latex terpolymère butadiène/styrène/vinyl pyridine 70/15/15 à une concentration de 41 % dans l'eau.

La résine d'encollage a elle-même la composition suivante (parties en poids) :

| Résorcine | 65 |
|---|---|
| Soude 1N | 44 |
| Formaldéhyde 31 % | 114 |
| Eau | 777 |

On effectue ensuite un traitement thermique entre 210° et 260°C, par exemple à 250°C, pendant un temps compris entre 20 et 120 secondes, par exemple 30 secondes.

Les assemblages ainsi traités sont ensuite soumis au test d'adhésion décrit au § J du chapitre I.

Les résultats sont donnés dans le tableau 5 qui suit. Dans ce tableau, toutes les valeurs d'arrachement sont ramenées arbitrairement à une même base 100 qui correspond à la valeur d'arrachement mesurée pour l'assemblage de type A testé à 20°C. Il s'agit donc de valeurs relatives.

Tableau 5

| Type d'assemblage | Adhésion à 20°C | Adhésion à 120°C |
|---|---|---|
| A | 100 | 59 |
| B | 146 | 100 |
| C | 140 | 102 |
| D | 137 | 95 |

On constate d'après ce tableau 5 que l'adhésion des monofilaments conformes à l'invention (assemblages de type B, C, D), pour une température de test donnée, est très supérieure à l'adhésion des monofilaments non conformes à l'invention (assemblage de type A). On constate d'autre part que l'adhésion à chaud (test à 120°C) des monofilaments conformes à l'invention est pratiquement égale à l'adhésion à froid (test à 20°C) des monofilaments non conformes à l'invention.

En conclusion, par rapport au monofilament décrit dans la demande précitée PCT/CH90/00155, le monofilament conforme à l'invention comportant une peau faiblement structurée par rapport à son coeur, montre de façon inattendue d'une part des propriétés nettement améliorées, à la fois en ce qui concerne l'adhésion, la résistance à la fatigue et à l'abrasion, et d'autre part une amélioration notable pour certaines de ses caractéristiques dynamométriques, notamment l'énergie à la rupture.

Les monofilaments conformes à l'invention peuvent être utilisés par exemple pour réaliser des assemblages, notamment des assemblages tels que ces monofilaments soient pratiquement enroulés en hélice autour d'un axe, l'angle aigu $\gamma$ que fait chaque monofilament avec cet axe, supposé rectiligne, étant inférieur à 30°, la torsion de chaque monofilament sur lui-même étant inférieure à 10 tours par mètre d'assemblage. Ces assemblages peuvent être par exemple réalisés avec des procédés et des dispositifs de câblage analogues à ceux utilisés pour réaliser des assemblages avec fils métalliques. Il va de soi que d'autres utilisations sont possibles.

**Revendications**

1. Monofilament aramide ayant les propriétés suivantes:

   a) il vérifie les relations :

   $1,7 \leq Ti \leq 260$ ;
   $40 \leq D \leq 480$ ;
   $T \geq 180 - D/3$ ;

$Mi \geq 1600$ ;
$Ar > 2,00$
$Er > 20,0 - D/30$ ;

Ti étant le titre en tex, D étant le diamètre en $\mu$m (micromètre), T étant la ténacité en cN/tex, Mi étant le module initial en cN/tex, Ar étant l'allongement à la rupture en %, Er étant l'énergie à la rupture par unité de masse en J/g, pour ce monofilament ;

b) il possède une peau faiblement structurée par rapport à son coeur.

2. Monofilament aramide selon la revendication 1, caractérisé par les relations suivantes :

$T \geq 200 - D/3$ ; $Mi \geq 6400 - 10D$ ; $Ar > 3,00$ ;
$Er > 30,0 - D/30$.

3. Monofilament aramide selon la revendication 2, caractérisé par les relations suivantes :

$T \geq 220 - D/3$ ; $Mi \geq 6800 - 10D$ ; $Ar > 4,00$ ;
$Er > 40,0 - D/30$.

4. Monofilament aramide selon l'une quelconque des revendications 1 à 3, caractérisé par la relation suivante :
$T \geq 225 - D/3$.

5. Monofilament aramide selon l'une quelconque des revendications 1 à 4, caractérisé par la relation suivante :
$Ar > 4,50$.

6. Monofilament aramide selon l'une quelconque des revendications 1 à 5, caractérisé par la relation suivante :
$Er > 42,5 - D/30$.

7. Monofilament aramide selon l'une quelconque des revendications 1 à 6, caractérisé par la relation suivante :
$\rho > 1,380$, $\rho$ étant sa masse volumique exprimée en g/cm$^3$.

8. Monofilament aramide selon la revendication 7,
caractérisé par la relation suivante :
$\rho > 1,400$.

9. Monofilament aramide selon l'une quelconque des revendications 1 à 8, caractérisé par la relation suivante :
$V.I.(f) > 4,0$ , $V.I.(f)$ étant sa viscosité inhérente exprimée en dl/g.

10. Monofilament aramide selon la revendication 9, caractérisé par la relation suivante :
$V.I.(f) \geq 4,5$.

11. Monofilament aramide selon la revendication 10, caractérisé par la relation suivante :
$V.I.(f) \geq 5,0$.

12. Monofilament aramide selon l'une quelconque des revendications 1 à 11, caractérisé en ce qu'il comporte essentiellement des enchaînements p-phénylène téréphtalamide.

13. Monofilament aramide selon l'une quelconque des revendications 1 à 11, caractérisé en ce qu'il est en poly(p-phénylène téréphtalamide).

14. Assemblage comportant au moins un monofilament aramide conforme à l'une quelconque des revendications 1 à 13.

15. Article renforcé par au moins un monofilament aramide conforme à l'une quelconque des revendications 1 à 13.

16. Article renforcé par au moins un assemblage conforme à la revendication 14.

**17.** Article selon l'une quelconque des revendications 15 ou 16, caractérisé en ce qu'il est une enveloppe de pneumatique.

**18.** Procédé pour obtenir un monofilament conforme à l'une quelconque des revendications 1 à 13, comportant les étapes suivantes :

a) on réalise une solution d'au moins un polyamide aromatique tel qu'au moins 85 % des liaisons amides (-CO-NH-) soient reliées directement à deux noyaux aromatiques, la viscosité inhérente V.I.(p) de ce(s) polyamide(s) étant au moins égale à 4,5 dl/g, la concentration C de polyamide(s) dans la solution étant d'au moins 20 % en poids, cette composition de filage étant optiquement anisotrope à l'état fondu et au repos ;

b) on extrude cette solution dans une filière à travers un capillaire dont le diamètre "d" est supérieur à 80 μm , la température de filage Tf, c'est-à-dire la température de la solution lors de son passage dans le capillaire, étant au plus égale à 105°C ;

c) le jet liquide sortant du capillaire est étiré dans une couche de fluide non coagulante ;

d) on introduit ensuite la veine liquide étirée ainsi obtenue dans un milieu coagulant, le monofilament ainsi en cours de formation restant en contact dynamique avec le milieu coagulant pendant le temps "t", la température du milieu coagulant Tc étant au plus égale à 16°C ;

e) on lave et on sèche le monofilament ;

f) on met le monofilament lavé et séché au contact d'un solvant de ce monofilament, ce solvant de traitement étant capable de dissoudre rapidement sa surface de manière à produire une peau faiblement structurée par rapport à son coeur ;

g) on lave et on sèche le monofilament ainsi obtenu ; le diamètre D du monofilament sec ainsi terminé et le temps t défini à l'étape (d) sont reliés par les relations suivantes :
$t = KD^2$ ; $K > 30$,
t étant exprimé en seconde, D étant exprimé en millimètre et K en s/mm², K étant dite "constante de coagulation".

**19.** Procédé selon la revendication 18, caractérisé en ce qu'au moins une des relations suivantes est vérifiée :
V.I.(p) ≥ 5,3 dl/g ; C ≥ 20,2 % ; Tf ≤ 90°C ; Tc ≤ 10°C ; K ≥ 200 s/mm².

**20.** Procédé selon l'une quelconque des revendications 18 ou 19, caractérisé en ce qu'au moins une des relations suivantes est vérifiée :
1/d ≤ 10 ; 5 degrés ≤ β ≤ 90 degrés ; 3 mm ≤ e ≤ 20 mm ;
2 ≤ FEF ≤ 15 ; Tt ≥ 5s,
"l" étant la longueur du capillaire en μm, β étant l'angle d'ouverture d'un convergent précédant le capillaire, "e" étant l'épaisseur de la couche non coagulante, FEF étant le facteur d'étirage au filage, Tt étant le temps de contact avec le solvant de traitement.

**21.** Procédé selon l'une quelconque des revendications 18 à 20, caractérisé en ce que le milieu coagulant est une solution aqueuse d'acide sulfurique.

**22.** Procédé selon l'une quelconque des revendications 18 à 21, caractérisé en ce que le monofilament en cours de coagulation est soumis à des tensions inférieures à 3 cN/tex.

**23.** Procédé selon l'une quelconque des revendications 18 à 22, caractérisé en ce que le solvant de traitement est de l'acide sulfurique concentré d'une concentration en poids proche de 100 %.

**24.** Procédé selon l'une quelconque des revendications 18 à 23, caractérisé en ce que la température de séchage est au plus égale à 200°C.

**25.** Procédé selon l'une quelconque des revendications 18 à 24, caractérisé en ce que les viscosités inhérentes V.I. (f) et V.I.(p), exprimées en dl/g, sont liées par la relation :

V.I.(f) ≥ V.I.(p) - 1,2,

V.I.(f) étant la viscosité inhérente du monofilament.

26. Procédé selon l'une quelconque des revendications 18 à 25, caractérisé en ce que la solution de filage est réalisée avec de l'acide sulfurique dont la concentration en poids est proche de 100 %.

27. Procédé selon l'une quelconque des revendications 18 à 26, caractérisé en ce qu'il est mis en oeuvre à partir d'au moins un polyamide aromatique comportant essentiellement des enchaînements p-phénylène téréphtalamide.

28. Procédé selon l'une quelconque des revendications 18 à 26, caractérisé en ce qu'il est mis en oeuvre à partir de poly(p-phénylène téréphtalamide).

## Claims

1. An aramid monofilament, having the following properties:

    a) it satisfies the relationships:

    $$1.7 \leq Ti \leq 260;$$
    $$40 \leq D \leq 480;$$
    $$T \geq 180 - D/3;$$
    $$Mi > 1600;$$
    $$Ar > 2.00;$$
    $$Er > 20.0 - D/30;$$

    Ti being the linear density in tex, D being the diameter in μm (micrometre), T being the tenacity in cN/tex, Mi being the initial modulus in cN/tex, Ar being the elongation upon rupture in %, Er being the energy upon rupture per unit of weight in J/g, for this monofilament;

    b) it has a slightly structured skin, relative to its core.

2. An aramid monofilament according to claim 1, characterised by the following relationships:
   $T \geq 200 - D/3$; $Mi \geq 6400 - 10D$; $Ar > 3.00$; $Er > 30.0 - D/30$.

3. An aramid monofilament according to claim 2, characterised by the following relationships:
   $T \geq 220 - D/3$; $Mi \geq 6800 - 10D$; $Ar > 4.00$; $Er > 40.0 - D/30$.

4. An aramid monofilament according to any one of claims 1 to 3, characterised by the following relationship:
   $T \geq 225 - D/3$.

5. An aramid monofilament according to any one of claims 1 to 4, characterised by the following relationship:
   $Ar > 4.50$.

6. An aramid monofilament according to any one of claims 1 to 5, characterised by the following relationship:
   $Er > 42.5 - D/30$.

7. An aramid monofilament according to any one of claims 1 to 6, characterised by the following relationship:
   $\rho > 1.380$, $\rho$ being its density expressed in g/cm$^3$.

8. An aramid monofilament according to claim 7, characterised by the following relationship:
   $\rho > 1.400$.

9. An aramid monofilament according to any one of claims 1 to 8, characterised by the following relationship:
   V.I.(f) > 4.0, V.I.(f) being its inherent viscosity expressed in dl/g.

10. An aramid monofilament according to claim 9, characterised by the following relationship:
    V.I.(f) ≥ 4.5.

**11.** An aramid monofilament according to claim 10, characterised by the following relationship:
V.I.(f) ≥ 5.0.

**12.** An aramid monofilament according to any one of claims 1 to 11, characterised in that it comprises essentially p-phenylene terephthalamide units.

**13.** An aramid monofilament according to any one of claims 1 to 11, characterised in that it consists of poly(p-phenylene terephthalamide).

**14.** An assembly comprising at least one aramid monofilament according to any one of claims 1 to 13.

**15.** An article reinforced by at least one aramid monofilament according to any one of claims 1 to 13.

**16.** An article reinforced by at least one assembly according to claim 14.

**17.** An article according to any one of claims 15 or 16, characterised in that it is a tyre.

**18.** A method of obtaining a monofilament according to any one of claims 1 to 13, comprising the following steps:

a) a solution is formed of at least one aromatic polyamide such that at least 85% of the amide linkages (-CO-NH-) are joined directly to two aromatic rings, the inherent viscosity V.I.(p) of this polyamide or these polyamides being at least equal to 4.5 dl/g, the concentration C of polyamide(s) in the solution being at least 20% by weight, this spinning composition being optically anisotropic in the molten state and at rest;

b) this solution is extruded in a spinneret through a capillary the diameter "d" of which is greater than 80 μm, the spinning temperature Tf, that is to say the temperature of the solution upon its passage through the capillary, being at most equal to 105°C;

c) the liquid jet emerging from the capillary is drawn in a non-coagulating layer of fluid;

d) the drawn liquid vein thus obtained is then introduced into a coagulating medium, the monofilament which is thus being formed remaining in dynamic contact with the coagulating medium for the time "t", the temperature of the coagulating medium Tc being at most equal to 16°C;

e) the monofilament is washed and dried;

f) the washed and dried monofilament is contacted with a solvent for this monofilament, this treatment solvent being capable of rapidly dissolving its surface so as to produce a slightly structured skin relative to its core;

g) the monofilament thus obtained is washed and dried; the diameter D of the dry monofilament which has thus been completed and the time t defined in step (d) are related by the following relationships:
$t = KD^2$ ; $K > 30$
t being expressed in seconds, D being expressed in millimetres and K in s/mm$^2$, K being referred to as the "coagulation constant".

**19.** A method according to claim 18, characterised in that at least one of the following relationships is satisfied:
V.I.(p) ≥ 5.3 dl/g; C ≥ 20.2%; Tf ≤ 90°C; Tc ≤ 10°C; K ≥ 200 s/mm$^2$.

**20.** A method according to any one of claims 18 or 19, characterised in that at least one of the following relationships is satisfied:
1/d ≤ 10; 5 degrees ≤ β ≤ 90 degrees; 3 mm ≤ e ≤ 20 mm;
2 ≤ FEF ≤ 15, Tt ≥ 5 s;
"1" being the length of the capillary in μm, β being the opening angle of a convergent preceding the capillary, "e" being the thickness of the non-coagulating layer, and FEF being the spinning draw factor, Tt being the time of contact with the treatment solvent.

**21.** A method according to any one of claims 18 to 20, characterised in that the coagulating medium is an aqueous solution of sulphuric acid.

22. A method according to any one of claims 18 to 21, characterised in that the monofilament being formed is subjected to tensions of less than 3 cN/tex.

23. A method according to any one of claims 18 to 22, characterised in that the treatment solvent is concentrated sulphuric acid having a concentration by weight of close to 100%.

24. A method according to any one of claims 18 to 23, characterised in that the drying temperature is at most equal to 200°C.

25. A method according to any one of claims 18 to 24, characterised in that the inherent viscosities V.I.(f) and V.I.(p), expressed in dl/g, are connected by the relationship:
V.I.(f) $\geq$ V.I.(p) - 1.2,
V.I.(f) being the inherent viscosity of the monofilament.

26. A method according to any one of claims 18 to 25, characterised in that the spinning solution is prepared with sulphuric acid, the concentration of which by weight is close to 100%.

27. A method according to any one of claims 18 to 26, characterised in that it is carried out starting from at least one aromatic polyamide having essentially p-phenylene terephthalamide units.

28. A method according to any one of claims 18 to 26, characterised in that it is carried out starting with poly(p-phenylene terephthalamide).

**Patentansprüche**

1. Aramid-Monofilament mit folgenden Eigenschaften:

   a) es erfüllt die folgenden Beziehungen:

   $1,7 \leq Ti \leq 260$;
   $40 \leq D \leq 480$;
   $T \geq 180 - D/3$;
   $Mi \geq 1600$;
   $Ar > 2,00$;
   $Er > 20,0 - D/30$;

   wobei Ti den Titer in tex bedeutet, D den Durchmesser in µm (Mikrometer) bedeutet, T die Feinheitfestigkeit in cN/tex bedeutet, Mi den anfänglichen Modul in cN/tex bedeutet, Ar die Bruchdehnung in % bedeutet und Er die Bruchenergie pro Masseneinheit in J/g für das Monofilament bedeutet;
   b) es weist im Vergleich zu seinem Kern eine schwach strukturierte Haut auf.

2. Aramid-Monofilament nach Anspruch 1, gekennzeichnet durch die folgenden Beziehungen: $T \geq 200 - D/3$; $Mi \geq 6400 - 10D$; $Ar > 3,00$; $Er > 30,0 - D/30$.

3. Aramid-Monofilament nach Anspruch 2, gekennzeichnet durch die folgenden Beziehungen: $T \geq 220 - D/3$; $Mi \geq 6800 - 10D$; $Ar > 4,00$; $Er > 40,0 - D/30$.

4. Aramid-Monofilament nach einem der Ansprüche 1 bis 3, gekennzeichnet durch die folgende Beziehung: $T \geq 225 - D/3$.

5. Aramid-Monofilament nach einem der Ansprüche 1 bis 4, gekennzeichnet durch die folgende Beziehung: $Ar > 4,50$.

6. Aramid-Monofilament nach einem der Ansprüche 1 bis 5, gekennzeichnet durch die folgende Beziehung: $Er > 42,5 - D/30$.

7. Aramid-Monofilament nach einem der Ansprüche 1 bis 6, gekennzeichnet durch die folgende Beziehung: $\rho > 1,380$, wobei $\rho$ die in g/cm$^3$ angegebene Dichte bedeutet.

8. Aramid-Monofilament nach Anspruch 7, gekennzeichnet durch die folgende Beziehung: $\rho > 1,400$.

9. Aramid-Monofilament nach einem der Ansprüche 1 bis 8, gekennzeichnet durch die folgende Beziehung: V.I.(f) > 4,0, wobei V.I. (f) die in dl/g angegebene inhärente Viskosität bedeutet.

10. Aramid-Monofilament nach Anspruch 3, gekennzeichnet durch die folgende Beziehung: V.I.(f) $\geq$ 4,5.

11. Aramid-Monofilament nach Anspruch 10, gekennzeichnet durch die folgende Beziehung: V.I.(f) $\geq$ 5,0.

12. Aramid-Monofilament nach einem der Ansprüche 1 bis 11, dadurch gekennzeichnet, daß es im wesentlichen p-Phenylenterephthalamid-Verknüpfungen umfaßt.

13. Aramid-Monofilament nach einem der Ansprüche 1 bis 11, dadurch gekennzeichnet, daß es aus Poly-(p-phenylenterephthalamid) besteht.

14. Anordnung, umfassend mindestens ein Aramid-Monofilament nach einem der Ansprüche 1 bis 13.

15. Formkörper, verstärkt mit mindestens einem AramidMonofilament nach einem der Ansprüche 1 bis 13.

16. Formkörper verstärkt mit mindestens einem Anordnung nach Anspruch 14.

17. Formkörper nach einem der Ansprüche 15 oder 16, dadurch gekennzeichnet, daß es sich um einen Luftreifen handelt.

18. Verfahren zur Herstellung eines Monofilaments nach einem der Ansprüche 1 bis 13, umfassend folgende Stufen:

a) es wird eine Lösung von mindestens einem aromatischen Polyamid hergestellt, bei dem mindestens 85% der Amidbindungen (-CO-NH-) direkt mit zwei aromatischen Kernen verbunden sind, wobei die inhärente Viskosität V.I. (p) des oder der Polyamide mindestens 4,5 dl/g beträgt, die Konzentration C des oder der Polyamide in der Lösung mindestens 20 Gew.-% beträgt und diese Spinnzusammensetzung im geschmolzenen Zustand und im Ruhezustand optisch anisotrop ist;
b) diese Lösung wird mit einer Spinndüse mittels einer Kapillare, deren Durchmesser "d" mehr als 80 µm beträgt, extrudiert, wobei die Spinntemperatur Tf, d. h. die Temperatur der Lösung während des Durchtritts durch die Kapillare, mindestens 105°C beträgt;
c) der die Kapillare verlassende flüssige Strahl wird in einer Schicht eines nicht-koagulierenden Fluids gereckt;
d) anschließend wird der auf diese Weise erhaltene, gereckte flüssige Strahl in ein koagulierendes Medium eingeführt, wobei das Monofilament im Verlauf seiner Bildung während der Zeitspanne "t" in dynamischem Kontakt mit dem koagulierenden Medium verbleibt, wobei die Temperatur des koagulierenden Mediums Tc mindestens 16°C beträgt;
e) das Monofilament wird gewaschen und getrocknet;
f) das gewaschene und getrocknete Monofilament wird in Kontakt mit einem Lösungsmittel für das Monofilament gebracht, wobei das Behandlungslösungsmittel dazu befähigt ist, rasch die Oberfläche so zu lösen, daß sich eine im Vergleich zum Kern schwach strukturierte Haut bildet;
g) das auf diese Weise erhaltene Monofilament wird gewaschen und getrocknet;
wobei der Durchmesser D des auf diese Weise fertiggestellten Monofilaments und die für die Stufe (d) definierte Zeitspanne durch die folgenden Beziehungen miteinander verbunden sind:
$t = KD^2$; K > 30,
wobei t in Sekunden, D in Millimeter und K in s/mm$^2$ angegeben werden, wobei K die Koagulationskonstante bedeutet.

19. Verfahren nach Anspruch 18, dadurch gekennzeichnet, daß es mindestens eine der folgenden Beziehungen erfüllt: V.I.(p) $\geq$ 5,3 dl/g; C $\geq$ 20,2%; Tf $\leq$ 90°C; Tc $\leq$ 10°C; K $\geq$ 200 s/mm$^2$.

20. Verfahren nach einem der Ansprüche 18 oder 19, dadurch gekennzeichnet, daß es mindestens eine der folgenden Beziehungen erfüllt: 1/d $\leq$ 10; 5 Grad $\leq$ $\beta$ $\leq$ 90 Grad; 3 mm $\leq$ e $\leq$ 20 mm; 2 $\leq$ FEF $\leq$ 15; Tt $\geq$ 5s, wobei "l" die Länge der Kapillare in µm bedeutet, $\beta$ den Öffnungswinkel eines der Kapillare vorausgehenden konvergierenden Raums bedeutet, "e" die Dicke der nicht-koagulierenden Schicht bedeutet, FEF den Verstrecktfaktor beim Spinnvorgang bedeutet und Tt die Kontaktzeit mit dem Behandlungslösungsmittel bedeutet.

21. Verfahren nach einem der Ansprüche 18 bis 20, dadurch gekennzeichnet, daß es sich beim Koagulationsmedium um eine wäßrige Schwefelsäurelösung handelt.

22. Verfahren nach einem der Ansprüche 18 bis 21, dadurch gekennzeichnet, daß das Monofilament im Verlauf der Koagulation Spannungen von weniger als 3 cN/tex unterzogen wird.

23. Verfahren nach einem der Ansprüche 18 bis 22, dadurch gekennzeichnet, daß es sich beim Behandlungslösungsmittel um konzentrierte Schwefelsäure mit einer Konzentration in der Nähe von 100 Gew.-% handelt.

24. Verfahren nach einem der Ansprüche 18 bis 23, dadurch gekennzeichnet, daß die Trocknungstemperatur höchstens 200°C beträgt.

25. Verfahren nach einem der Ansprüche 18 bis 24, dadurch gekennzeichnet, daß die inhärenten Viskositäten V.I.(f) und V.I.(p), angegeben in dl/g, miteinander in folgender Beziehung stehen: $V.I.(f) \geq V.I.(p) = 1,2$, wobei V.I.(f) die inhärente Viskosität des Monofilaments bedeutet.

26. Verfahren nach einem der Ansprüche 18 bis 25, dadurch gekennzeichnet, daß es sich bei der Spinnlösung um Schwefelsäure mit einer Konzentration in der Nahe von 100 Gew.-% handelt.

27. Verfahren nach einem der Ansprüche 18 bis 26, dadurch gekennzeichnet, daß man als Ausgangsmaterial mindestens ein aromatisches Polyamid, das im wesentlichen p-Phenylenterephthalamid-Verknüpfungen umfaßt, verwendet.

28. Verfahren nach einem der Ansprüche 18 bis 26, dadurch gekennzeichnet, daß als Ausgangsmaterial Poly-(p-phenylenterephthalamid) verwendet wird.

Fig. 1

## Fig. 2

## Fig.3

Fig. 4

Fig. 5